# EUROPÄISCHE PATENTANMELDUNG

(11) **EP 1 026 831 A2**
(43) Veröffentlichungstag der Anmeldung: **09.08.2000**
(21) Anmeldenummer: 00440012.3
(22) Anmeldetag: 14.01.2000
(51) Int. Cl.: H04B 1/20

(54) **Verfahren zum Bedienen einer Kombination von Geräten der Unterhaltungselektronik**

(30) Priorität: 19.01.1999 DE 19901822
(71) Anmelder: ALCATEL, 75008 Paris (FR)
(72) Erfinder: Reher, Norbert, 70806 Kornwestheim (DE)
(74) Vertreter: Brose, Gerhard, Dipl.-Ing.

(57) **Zusammenfassung**

Die Erfindung betrifft ein Verfahren zum Bedienen von Geräten der Unterhaltungselektronik. Um die Bedienung mehrerer Geräte der Unterhaltungselektronik in einem Haushalt entscheidend zu erleichtern, schlägt die Erfindung ein Verfahren vor, das gekennzeichnet ist durch die nachfolgenden Schritte:
- ein Computer gibt einem Benutzer der Geräte verschiedene Wahlmöglichkeiten vor,
- der Computer wählt abhängig von der ausgewählten Wahlmöglichkeit eine Kombinatin der zu bedienenden Geräte aus,
- der Computer bestimmt abhängig von der ausgewählten Wahlmöglichkeit die Geräteparameter für die Kombination der Geräte,
- der Computer bestimmt abhängig von der ausgewählten Wahlmöglichkeit die Zeitparameter für die Kombination der Geräte,
- der Computer bestimmt abhängig von den bestimmten Geräteparametern und von den bestimmten Zeitparametern entsprechende Bediencodes für die Kombination der Geräte aus, und
- der Computer sendet die Bediencodes für die Kombination der Geräte aus.

## Beschreibung

Die vorliegende Erfindung betrifft ein Verfahren zum Bedienen von Geräten der Unterhaltungselektronik. Die Erfindung betrifft außerdem einen Computer und ein Fernbediengerät zum Bedienen von Geräten der Unterhaltungselektronik.

In den meisten Haushalten stehen mehrere Geräte der Unterhaltungselektronik, wie bspw. eine Stereoanlage mit Verstärkerteil, Radioteil, Compact-Cassettenteil, Vinylplattenteil und Compact-Disc-Teil, ein Fernseher, ein Satellitenempfänger, ein Videorecorder und ein Decoder zum Empfangen verschlüsselter Fernseh- und Rundfunksendungen, um nur einige zu nennen. All diese Geräte stehen in der Regel in einem Raum. Jedes der Geräte muß üblicherweise mit einem gesonderten Fernbediengerät bedient werden. Um bspw. eine verschlüsselte Radiosendung über Satellit empfangen zu können, müssen der Decoder, der Satellitenempfänger und der Verstärkerteil und der Radioteil der Stereoanlage bedient und entsprechend eingestellt werden. Wenn dieses Radioprogramm auch noch auf Cassette aufgezeichnet werden soll, muß zusätzlich sogar das Cassettenteil der Stereoanlage bedient werden. In der Regel weist jedes dieser Geräte eine gesonderte Fernbedienung auf. Dadurch gestaltet sich die Bedienung der vielen Geräte für den Benutzer äußerst kompliziert und zeitaufwendig.

Aus dem Stand der Technik ist ein Fernbediengerät bekannt, mit dem mehrere Geräte bedient werden können. So können mit einem Fernbediengerät sämtliche Geräte einer Stereoanlage bedient werden. Dazu muß das Fernbediengerät auf das entsprechende Gerät umgeschaltet werden, und dann kann das gewünschte Gerät bedient werden. Darüber hinaus sind Fernbediengeräte bekannt, die eine Lernfunktion haben und sich an unterschiedliche Geräte anpassen können. Auch bei derartigen Fernbediengeräten muß das Fernbediengerät zunächst auf das entsprechende Gerät umgeschaltet werden, bevor das gewünschte Gerät bedient werden kann. Durch den Einsatz eines Fernbediengeräts zum Bedienen mehrerer Geräte der Unterhaltungselektronik kann zwar die zur Bedienung mehrerer Geräte notwendige Zeit vermindert werden, weil nicht mehr verschiedene Fernbediengeräte zum Bedienen der Geräte zur Hand genommen werden müssen, es ist aber nach wie vor recht kompliziert, die einzelnen Geräte anzusteuern und entsprechend zu bedienen.

Aus dem Stand der Technik sind des weiteren verschiedene Programmierhilfen bekannt, die das Bedienen der Geräte, insbesondere das Programmieren der Geräte, erleichtern sollen. Bei dem sog. Showview-Verfahren kann ein Benutzer bspw. einer Fernsehzeitschrift einen Zahlencode entnehmen, der einer bestimmten Fernsehsendung zugewiesen ist. Dieser Zahlencode wird in einen Videorecorder eingegeben. Der Videorecorder kann aus dem Zahlencode Informationen über die Fernsehsendung, insbesondere das Datum, die Anfangszeit, den Sender und die Dauer der Fernsehsendung, bestimmen. Darüber hinaus ist es auch bekannt diese Informationen über die Fernsehsendung mittels eines Strichcodes in den Videorecorder einzulesen. Durch das Showview-Verfahren und das Strichcode-Verfahren kann das Programmieren des Videorecorders erleichtert werden. Eine Satellitenantenne, ein Decoder oder ein Fernsehgerät müssen jedoch nach wie vor gesondert bedient und eingestellt werden.

Schließlich ist es aus dem Stand der Technik bekannt, dem Benutzer die Auswahl einer Fernseh- oder Radiosendung dadurch zu erleichtern, daß ihm sämtliche zur Verfügung stehenden Sendungen innerhalb eines gewünschten Zeitraums zur Auswahl vorgelegt werden. Das kann bspw. mittels einer Programmzeitschrift, mittels Videotext, mittels Bildschirmtext oder mittels des Internets geschehen. Aus der Vielzahl der Wahlmöglichkeiten kann der Benutzer dann die ihn interessierenden Sendungen auswählen und seine Geräte der Unterhaltungselektronik entsprechend bedienen und programmieren. Dadurch kann zwar die Anzahl einer Sendung erleichtert werden, eine Erleichterung der Bedienung der Geräte wird durch diese Maßnahme jedoch nicht bewirkt.

Die Aufgabe der vorliegenden Erfindung besteht darin, ein Verfahren der eingangs genannten Art dahingehend auszugestalten und weiterzubilden, daß die Bedienung einer Kombination von Geräten der Unterhaltungselektronik entscheidend erleichtert wird.

Zur Lösung dieser Aufgabe schlägt die Erfindung ausgehend von dem Verfahren der eingangs genannten Art ein Verfahren vor, das gekennzeichnet ist durch die nachfolgenden Schritte:
- ein Computer gibt einem Benutzer der Geräte verschiedene Wahlmöglichkeiten vor,
- der Computer wählt abhängig von der ausgewählten Wahlmöglichkeit eine Kombination der zu bedienenden Geräte aus,
- der Computer bestimmt abhängig von der ausgewählten Wahlmöglichkeit die Geräteparameter für die Kombination der Geräte,
- der Computer bestimmt abhängig von der ausgewählten Wahlmöglichkeit die Zeitparameter für die Kombination der Geräte,
- der Computer bestimmt abhängig von den bestimmten Geräteparametern und von den bestimmten Zeitparametern entsprechende Bediencodes für die Kombination der Geräte aus, und
   der Computer sendet die Bediencodes für die Kombination der Geräte aus.

Das erfindungsgemäße Verfahren erleichtert dem Benutzer zunächst die Auswahl einer gewünschten Sendung, indem der Computer dem Benutzer verschiedene Wahlmöglichkeiten vorgibt. Die Vorgabe der Wahlmöglichkeiten kann einfach darin bestehen, daß dem Benutzer die Möglichkeit gegeben wird, auf einer Bildschirmoberfläche des Computers einige wenige notwendige Geräteparameter für die Bedienung der Geräte einzustellen. So wäre es bspw. denkbar, daß der Benutzer einfach, die Art der gewünschten Sendung (Radio- oder Fernsehsendung), den gewünschten Sender und eine Anfangs- und Endzeit eingibt. Aus der ausgewählten Wahlmöglichkeit werden dann die Geräteparameter für die Kombination der Geräte, die Zeitparameter und schließlich die entsprechenden Bediencodes zur Ansteuerung der einzelnen Geräte bestimmt. Wenn bspw. die gewünschte Sendung aus dem Fernseher auf einem Videorecorder aufgenommen werden soll, kann der Computer Bediencodes für den Fernseher, den Videorecorder, eine Satellitenantenne und einen Decoder bestimmen.

Es ist auch denkbar, daß die Vorgabe der Wahlmöglichkeiten darin besteht, daß dem Benutzer auf der Bildschirmoberfläche die innerhalb eines bestimmten zeitlichen Rahmens zur Verfügung stehenden Sendungen angezeigt werden. Die zur Verfügung stehenden Sendung können bspw. aus dem Internet oder von einem geeigneten Speichermedium (z. B. einer Compact Disc-Read Only Memory (CD-ROM)) in den Computer geladen werden. Der Benutzer kann durch einfaches Anwählten der gewünschten Sendung den Computer dazu veranlassen, die Bediencodes für die Kombination der Geräte zu bestimmen. Dazu wählt der Computer abhängig von der ausgewählten Sendung die zu bedienenden Geräte aus und bestimmt die Geräteparameter für die zu bedienenden Geräte. Die Zeitparameter für die zu bedienenden Geräte werden ebenfalls abhängig von der ausgewählten Sendung bestimmt. Wenn bspw. eine bestimmte Fernsehsendung ausgewählt wurde, müssen der Satellitenempfänger, der Decoder und der Fernseher als zu bedienende Geräte ausgewählt werden. Der Computer bestimmt dann die Bediencodes für diese drei Geräte. Soll diese Fernsehsendung zusätzlich auf einen Videorecorder aufgenommen werden, bestimmt der Computer auch noch die Bediencodes für den Videorecorder.

Durch das erfindungsgemäße Verfahren wird der Benutzer nahezu vollständig von der komplizierten und zeitaufwendigen Bedienung der einzelnen Geräte befreit. Der Benutzer muß nur noch aus verschiedenen Wahlmöglichkeiten eine bestimmte Sendung auswählen. Der Computer steuert und veranlaßt die Bedienung sämtlicher zum Empfang der ausgewählten Sendung notwendigen Geräte.

Die von dem Computer bestimmten Bediencodes für die Geräte werden schließlich von dem Computer ausgesandt. Gemäß einer vorteilhaften Weiterbildung der vorliegenden Erfindung sendet der Computer die Bediencodes unmittelbar an die Kombination der Geräte aus. Dazu ist es erforderlich, daß der Computer eine geeignete Schnittstelle aufweist, über die er die Bediencodes zu den Geräten senden kann. Diese Schnittstelle ist vorzugsweise als eine Infrarot-Schnittstelle ausgebildet.

Alternativ wird vorgeschlagen, daß der Computer die Bediencodes an ein Fernbediengerät übermittelt, mit dem die Bediencodes dann an die Kombination der Geräte ausgesandt werden. Diese Ausführungsform ist insbesondere dann besonders vorteilhaft, wenn zwischen dem Computer und den zu bedienenden Geräten ein großer Abstand besteht, vor allem, wenn der Computer in einem anderen Raum steht als die Geräte. Dann nämlich kann der Benutzer mit dem Fernbediengerät in die Nähe der zu bedienenden Geräte gehen und zur Bedienung der Geräte die Bediencodes aus dem Fernbediengerät an die Geräte senden.

Vorzugsweise werden die Bediencodes für die ausgewählte Wahlmöglichkeit durch die Betätigung einer Bedientaste des Fernbediengeräts an die Kombination der Geräte ausgesandt. Die Bedientasten des Fernbediengeräts sind somit den einzelnen ausgewählten Sendungen zugeordnet. Durch Betätigen einer Bedientaste werden die Bediencodes der entsprechenden Sendung an die Geräte ausgesandt.

Die vorliegende Erfindung schlägt auch einen Computer vor, der gekennzeichnet ist durch
- Mittel zum Vorgeben von verschiedenen Wahlmöglichkeiten an einen Benutzer von Geräten der Unterhaltungselektronik,
- Mittel zum Auswählen einer Kombination von zu bedienenden Geräten abhängig von der ausgewählten Wahlmöglichkeit,
- Mittel zum Bestimmen der Geräteparameter für die Kombination der Geräte abhängig von der ausgewählten Wahlmöglichkeit,
- Mittel zum Bestimmen der Zeitparameter für die Kombination der Geräte abhängig von der ausgewählten Wahlmöglichkeit,
- Mittel zum Auswählen von entsprechenden Bediencodes für die Kombination der Geräte abhängig von den bestimmten Geräteparametern und von den bestimmten Zeitparametern, und
- Mittel zum Aussenden der Bediencodes für die Kombination der Geräte.

Gemäß einer vorteilhaften Weiterbildung der Erfindung wird vorgeschlagen, daß der Computer zum Aussenden der Bediencodes für die Kombination der Geräte eine Schnittstelle zu den Geräten aufweist. Die Schnittstelle des Computers zu den Geräten ist vorteilhafterweise als eine Infrarot-Schnittstelle ausgebildet. Das Geräte der Unterhaltungselektronik verfügen ebenfalls über eine derart ausgebildete Schnittstelle, damit die Bediencodes von dem Computer an die Geräte gesandt werden können.

Gemäß einer anderen vorteilhaften Weiterbildung der Erfindung wird vorgeschlagen, daß der Computer zum Aussenden der Bediencodes für die Kombination der Geräte eine, Schnittstelle zu einem Fernbediengerät aufweist. Vorteilhafterweise ist die Schnittstelle des Computers zu dem Fernbediengerät als eine Infrarot-Schnittstelle ausgebildet. Das Fernbediengerät verfügt ebenfalls über eine derart ausgebildete Schnittstelle, damit die Bediencodes von dem Computer an das Fernbediengerät gesandt werden können. Die Bediencodes werden in einem Speicher des Fernbediengeräts gespeichert und können über Bedientasten des Fernbediengeräts von diesem aus an die Geräte übermittelt werden.

Gemäß einer bevorzugten Ausführungsform wird vorgeschlagen, daß die Schnittstelle des Computers zu dem Fernbediengerät als eine Schnittstelle zu einem Telekommunikations-Netzwerk, insbesondere als ein Modulator-Demodulator (Modem), ausgebildet ist. Eine derart ausgebildete Schnittstelle hat den Vorteil, daß der Computer die Bediencodes auch über große Entfernungen über das Telefonnetz an das Fernbediengerät senden kann. Voraussetzung ist natürlich, daß das Fernbediengerät eine entsprechende Schnittstelle aufweist, um die Bediencodes aus dem Telefonnetz empfangen zu können. Die Schnittstelle des Fernbediengeräts kann in das Fernbediengerät selbst integriert sein, oder Teil einer Basisstation sein, in die das Fernbediengerät zur Übermittlung der Bediencodes vorübergehend eingesetzt wird.

Gemäß einer vorteilhaften Weiterbildung der Erfindung wird vorgeschlagen, daß der Computer zum Vorgeben von verschiedenen Wahlmöglichkeiten an den Benutzer eine Schnittstelle zu einem Computer-Netzwerk, insbesondere zu dem Internet, aufweist. Über das Internet können dann von entsprechenden Webseiten Informationen über das Fernseh- oder Radioprogramm in den Computer geladen und dem Benutzer auf einer Bildschirmoberfläche des Computers angezeigt werden. Es ist denkbar, daß der Benutzer die Möglichkeit hat, sich aus dem angezeigten Fernseh- oder Radioprogramm für eine bestimmte Zeit im Voraus ein Wunschprogramm zusammenzustellen. Durch einfaches Auswählen der gewünschten Sendungen bestimmt der Computer die Informationen über das Datum, an dem die Sendung ausgestrahlt wird, über die Anfangs- und Endzeit der Sendung und über den Sender, auf dem die Sendung ausgestrahlt wird. Der Computer kann diese Informationen einfach aus dem Internet herunterladen. Diese Informationen sind die wesentlichen Geräteparameter und Zeitparameter, die der Computer benötigt, um die der Sendung zugeordneten Bediencodes bestimmen zu können. Wählt der Benutzer auch noch eine Aufnahmeoption, werden für ein Aufnahmegerät, bspw. einen Videorecorder oder einen Cassettenrecorder, zusätzliche Bediencodes bestimmt.

Alternativ oder zusätzlich wird vorgeschlagen, daß der Computer zum Vorgeben von verschiedenen Wahlmöglichkeiten an den Benutzer eine Schnittstelle zum Empfang von Videotext-Daten aufweist. Auch über Videotext können Informationen über das Fernseh- oder Radioprogramm in den Computer geladen und dem Benutzer auf der Bildschirmoberfläche des Computers angezeigt werden.

Der vorliegenden Erfindung liegt auch die Aufgabe zugrunde, ein Fernbediengerät der eingangs genannten Art dahingehend auszugestalten und weiterzubilden, daß die Bedienung einer Kombination von Geräten der Unterhaltungselektronik entscheidend erleichtert wird.

Zur Lösung dieser Aufgabe schlägt die Erfindung ausgehend von einem Fernbediengerät der eingangs genannten Art ein Fernbediengerät vor, das gekennzeichnet ist durch:
- Mittel zum Empfangen von Bediencodes für eine Kombination der Geräte von einem Computer, und
- Mittel zum Aussenden der Bediencodes an die Kombination der Geräte.

Gemäß einer vorteilhaften Weiterbildung der Erfindung sind die Mittel zum Empfangen der Bediencodes von dem Computer als eine Infrarot-Schnittstelle ausgebildet. Alternativ wird vorgeschlagen, daß die Mittel zum Empfangen der Bediencodes von dem Computer als eine Schnittstelle zu einem Telekommunikations-Netzwerk, insbesondere als ein Modulator-Demodulator (Modem), ausgebildet sind.

Gemäß einer bevorzugten Ausführungsform der Erfindung wird vorgeschlagen, daß die Mittel zum Aussenden der Bediencodes an die Kombination der Geräte als eine Infrarot-Schnittstelle ausgebildet sind.

Gemäß einer vorteilhaften Weiterbildung der Erfindung wird vorgeschlagen, daß das Fernbediengerät mindestens eine Bedientaste aufweist, daß die Bediencodes für eine ausgewählte Wahlmöglichkeit in dem Fernbediengerät gespeichert sind und daß durch Betätigen der Bedientaste die Bediencodes für die Wahlmöglichkeit an die Kombination der Geräte aussendbar sind. Gemäß dieser Weiterbildung sind die Bediencodes für eine ausgewählte Sendung in dem Fernbediengerät gespeichert. Die Bediencodes werden durch Betätigen einer Bedientaste an die Geräte übermittelt.

Es ist jedoch auch denkbar, daß in dem Fernbediengerät die Bediencodes für mehrere Sendungen, bspw. für sämtliche Sendungen des Wunschprogramms des Benutzers für eine ganze Woche, gespeichert sind. Das hat den Vorteil, daß der Benutzer nur einmal pro Woche das Fernseh- und Rundfunkprogramm durchsehen und die gewünschten Sendungen auswählen muß. Der Computer bestimmt dann die Bediencodes für sämtliche ausgewählten Sendungen und übermittelt diese an die Fernbedienung. Dort sind die Bediencodes gemäß einer vorteilhaften Weiterbildung der Erfindung für mehrere ausgewählte Wahlmöglichkeiten in dem Fernbediengerät gespeichert, und durch Betätigen einer der Bedientasten werden die Bediencodes für eine der Wahlmöglichkeiten an die Kombination der Geräte ausgesendet. Jede der Bedientasten des Fernbediengeräts ist somit einer bestimmte Sendung zugeordnet.

Gemäß einer vorteilhaften Weiterbildung der Erfindung wird vorgeschlagen, daß die Fernbedienung mindestens eine Anzeigeeinheit aufweist, die dem Benutzer anzeigt, mit welcher Wahlmöglichkeit eine Bedientaste belegt ist. Dies führt zu einer weiteren Erleichterung der Bedienung der Geräte für den Benutzer. Es ist denkbar, daß der Anzeigetext von dem Computer zu dem Fernbediengerät übermittelt wird. Der Computer erhält die Informationen für den Anzeigetext, bspw. den Titel der Sendung, aus dem Internet oder über Videotext.

## Patentansprüche

1. Verfahren zum Bedienen von Geräten der Unterhaltungselektronik, **gekennzeichnet durch** die nachfolgenden Schritte:
- ein Computer gibt einem Benutzer der Geräte verschiedene Wahlmöglichkeiten vor,
- der Computer wählt abhängig von der ausgewählten Wahlmöglichkeit eine Kombination der zu bedienenden Geräte aus,
- der Computer bestimmt abhängig von der ausgewählten Wahlmöglichkeit die Geräteparameter für die Kombination der Geräte,
- der Computer bestimmt abhängig von der ausgewählten Wahlmöglichkeit die Zeitparameter für die Kombination der Geräte,
- der Computer bestimmt abhängig von den bestimmten Geräteparametern und von den bestimmten Zeitparametern entsprechende Bediencodes für die Kombination der Geräte aus, und
- der Computer sendet die Bediencodes für die Kombination der Geräte aus.

2. Verfahren nach Anspruch 1, dadurch gekennzeichnet, daß der Computer die Bediencodes unmittelbar an die Kombinatin der Geräte aussendet.

3. Verfahren nach Anspruch 1, dadurch gekennzeichnet, daß der Computer die Bediencodes an ein Fernbediengerät übermittelt, mit dem die Bediencodes dann an die Kombination der Geräte ausgesandt werden.

4. Verfahren nach Anspruch 3, dadurch gekennzeichnet, daß die Bediencodes für die ausgewählte Wahlmöglichkeit durch die Betätigung einer Bedientaste des Fernbediengeräts an die Kombination der Geräte ausgesandt werden.

5. Computer, **gekennzeichnet durch**:
- Mittel zum Vorgeben von verschiedenen Wahlmöglichkeiten an einen Benutzer von Geräten der Unterhaltungselektronik,
- Mittel zum Auswählen einer Kombination von zu bedienenden Geräten abhängig von der ausgewählten Wahlmöglichkeit,
- Mittel zum Bestimmen der Geräteparameter für die Kombination der Geräte abhängig von der ausgewählten Wahlmöglichkeit,
- Mittel zum Bestimmen der Zeitparameter für die Kombination der Gerste abhängig von der ausgewählten Wahlmöglichkeit,
- Mittel zum Auswählen von entsprechenden Bediencodes für die Kombination der Geräte abhängig von den bestimmten Geräteparametern und von den bestimmten Zeitparametern, und
- Mittel zum Aussenden der Bediencodes für die Kombination der Geräte.

6. Computer nach Anspruch 5, dadurch gekennzeichnet, daß der Computer zum Aussenden der Bediencodes für die Kombination der Geräte eine Schnittstelle zu den Geräten aufweist.

7. Computer nach Anspruch 6, dadurch gekennzeichnet, daß die Schnittstelle des Computers zu den Geräten als eine Infrarot-Schnittstelle ausgebildet ist.

8. Computer nach Anspruch 5, dadurch gekennzeichnet, daß der Computer zum Aussenden der Bediencodes für die Kombination der Geräte eine Schnittstelle zu einem Fernbediengerät aufweist.

9. Computer nach Anspruch 8, dadurch gekennzeichnet, daß die Schnittstelle des Computers zu dem Fernbediengerät als eine Infrarot-Schnittstelle ausgebildet ist.

10. Computer nach Anspruch 8, dadurch gekennzeichnet, daß die Schnittstelle des Computers zu dem Fernbediengerät als eine Schnittstelle zu einem Telekommunikations-Netzwerk, insbesondere als ein Modulator-Demodulator (Modem), ausgebildet ist.

11. Computer nach einem der Ansprüche 5 bis 10, dadurch gekennzeichnet, daß der Computer zum Vorgehen von verschiedenen Wahlmöglichkeiten an den Benutzer eine Schnittstelle zu einem Computer-Netzwerk, insbesondere zu dem Internet, aufweist.

12. Computer nach einem der Ansprüche 5 bis 10, dadurch gekennzeichnet, daß der Computer zum Vorgeben von verschiedenen Wahlmöglichkeiten an den Benutzer eine Schnittstelle zum Empfang von Videotext-Daten aufweist.

13. Fernbediengerät zum Bedienen von Geräten der Unterhaltungselektronik, **gekennzeichnet durch**:
- Mittel zum Empfangen von Bediencodes für eine Kombination der Geräte von einem Computer, und
- Mittel zum Aussenden der Bediencodes an die Kombination der Geräte.

14. Fernbediengerät nach Anspruch 13, dadurch gekennzeichnet, daß die Mittel zum Empfangen der Bediencodes von dem Computer als eine Infrarot-Schnittstelle ausgebildet sind.

15. Fernbediengerät nach Anspruch 13, dadurch gekennzeichnet, daß die Mittel zum Empfangen der Bediencodes von dem Computer als eine Schnittstelle zu einem Telekommunikations-Netzwerk, insbesondere als ein Modulator-Demodulator (Modem), ausgebildet sind.

16. Fernbediengerät nach einem der Ansprüche 13 bis 15, dadurch gekennzeichnet, daß die Mittel zum Aussenden der Bediencodes an die Kombination der Geräte als eine Infrarot-Schnittstelle ausgebildet sind.

17. Fernbediengerät nach einem der Ansprüche 13 bis 16, dadurch gekennzeichnet, daß das Fernbediengerät mindestens eine Bedientaste aufweist, daß die Bediencodes für eine ausgewählte Wahlmöglichkeit in dem Fernbediengerät gespeichert sind und daß durch Betätigen der Bedientaste die Bediencodes für die Wahlmöglichkeit an die Kombination der Geräte aussendbar sind.

18. Fernbediengerät nach Anspruch 17, dadurch gekennzeichnet, daß die Bediencodes für mehrere ausgewählte Wahlmöglichkeiten in dem Fernbediengerät gespeichert sind und daß durch Betätigen einer der Bedientasten die Bediencodes für eine der Wahlmöglichkeiten an die Kombination der Geräte aussendbar sind.

19. Fernbediengerät nach Anspruch 17 oder 18, dadurch gekennzeichnet, daß die Fernbedienung mindestens eine Anzeigeeinheit aufweist, die dem Benutzer anzeigt, mit welcher Wahlmöglichkeit eine Bedientaste belegt ist.
